# EUROPÄISCHE PATENTSCHRIFT

(11) **EP 3 794 920 B1**
(45) Veröffentlichungstag und Bekanntmachung des Hinweises auf die Patenterteilung: **06.04.2022**
(21) Anmeldenummer: 20189863.2
(22) Anmeldetag: 06.08.2020
(51) Int. Cl.: A01C 23/00

(54) **DÜSENKÖRPER ZUR VERWENDUNG IN EINER VORRICHTUNG ZUM VERTEILEN VON GÜLLE**
NOZZLE BODY FOR USE IN A DEVICE FOR DISTRIBUTING MANURE
CORPS DE BUSE DESTINÉ À L'UTILISATION DANS UN DISPOSITIF DE DISTRIBUTION DE LISIER

(30) Priorität: 18.09.2019 DE 202019105159 U
(43) Veröffentlichungstag der Anmeldung: 24.03.2021
(73) Patentinhaber: Geuking, Alexander, 97941 Tauberbischofsheim (DE)
(72) Erfinder: Geuking, Alexander, 97941 Tauberbischofsheim (DE)
(74) Vertreter: advotec.

(56) Entgegenhaltungen:
- DE-U1-202005 014 234
- SE-C2- 531 138
- US-A- 4 354 624
- US-A1- 2018 332 764

## Beschreibung

Die Erfindung betrifft einen Düsenkörper zur Verwendung in einer Vorrichtung zum Verteilen von Gülle nach dem Oberbegriff des Anspruchs 1.

Bei Gülle handelt es sich um ein wertvolles Düngemittel, das zur Fruchtbarmachung von landwirtschaftlichen Nutzflächen auf dem Boden ausgebracht werden kann. Im Hinblick auf eine gleichmäßige Ausbringung der Gülle auf der Bodenfläche sind aus dem Stand der Technik verschiedene Vorrichtungen zum Verteilen von Gülle bekannt.

Aus der DE 31 43 910 A1 ist eine Vorrichtung zum Verteilen von Gülle bekannt, die einen motorisch angetriebenen Rotor besitzt. Die Vorrichtung wird mit einem Gülletank eines Güllewagens verbunden. Ausgangsseitig ist an der Vorrichtung eine große Anzahl von flexiblen Schlauchleitungen angeschlossen. Durch jede Schlauchleitung kann durch geeignete Pumpen in kontrollierter Weise Gülle zu den Ausbringöffnungen an einem Ausleger gepumpt werden. Nachteilig an dieser Vorrichtung ist es, dass sie aufwendig und zudem sehr schwer ist. Die Nachrüstung von einfachen Güllewagen mit solchen Verteilvorrichtungen ist nicht möglich, da aufgrund des hohen Gewichts der Vorrichtung eine unzulässige, negative Stützlast eintritt.

Aus der DE 20 2005 014 234 U1 ist eine gattungsgemäße Vorrichtung zum Verteilen von Gülle bekannt. Diese Vorrichtung beinhaltet zumindest eine quer zur Fahrtrichtung positionierbare Rohrleitung, die in ihrer Längsrichtung in Reihe verteilt hintereinanderliegende Öffnungen aufweist. In jeder Öffnung ist ein Düsenkörper angeordnet. Aufgabe der Düsenkörper ist es für eine gleichmäßige Druckverteilung an den Auslassöffnungen, durch die die Gülle ausströmt, zu sorgen, so dass möglichst unabhängig vom Abstand der einzelnen Öffnung zum Rohrende eine jeweils gleiche Menge von Gülle durch die Auslassöffnungen ausströmt.

Aufgabe der vorliegenden Erfindung ist es, einen neuen Düsenkörper zur Verwendung in einer solchen Vorrichtung zum Verteilen von Gülle vorzuschlagen, mit der die Druckverteilung noch weiter auf ein bestimmtes Niveau angeglichen wird, so dass die an den einzelnen Auslassöffnungen ausströmende Gülle mengenmäßig möglichst an allen Auslassöffnungen angenähert ist.

Diese Aufgabe wird durch einen Düsenkörper nach der Lehre des Anspruchs 1 gelöst.

Vorteilhafte Ausführungsformen der Erfindung sind Gegenstand der Unteransprüche.

Der erfindungsgemäße Düsenkörper beruht auf dem Grundgedanken, dass auf der haubenartig gewölbten Oberseite des Düsenkörpers, die eine rampenartige Strömungsfläche bildet, zusätzlich zumindest eine konkav in den Düsenkörper eingeformte Strömungsnut vorgesehen ist. Versuche mit dem Düsenkörper haben gezeigt, dass durch die Strömungsnut in der Strömungsfläche die Strömungsverhältnisse rund um den Düsenkörper dahingehend verbessert werden, dass unabhängig von der Anordnung des Düsenkörpers in der Rohrleitung weitgehend angenäherte Druckverhältnisse beim Ausströmen der Gülle herrschen. Diese Angleichung der Druckverhältnisse wird durch eine zusätzliche Modifikation der Rückstauströmung, mit der die Gülle in der Rohrleitung zurückgestaut wird, erreicht.

Eine weitere Verbesserung der Angleichung der Druckverhältnisse am Düsenkörper wird ermöglicht, wenn der Düsenkörper gegenüber einer vertikalen Mittelebene spiegelsymmetrisch ausgebildet ist und dabei links und rechts von der Mittelebene jeweils eine konkav in den Düsenkörper eingeformte Strömungsnut aufweist. Durch die beiden spiegelsymmetrisch am Düsenkörper eingeformten Strömungsnuten kann die Rückstauströmung weiter verbessert und dadurch der Austrittsdruck an den verschiedenen Düsenkörpern unabhängig von ihrer Anordnung in der Rohrleitung angeglichen werden.

Weiterhin besonders vorteilhaft ist es, wenn der Düsenkörper eine konvex gewölbte Unterseite aufweist, die an der Innenseite der Rohrleitung formschlüssig zur Anlage bringbar ist. Sobald der Düsenkörper mit seiner Unterseite formschlüssig in der Rohrleitung anliegt, kann er dort fixiert, beispielsweise angeschraubt werden.

Um die Herstellung des Düsenkörpers zu vereinfachen und kostengünstige Fertigungsmethoden einsetzen zu können, ist es vorteilhaft, wenn der Düsenkörper mehrteilig aus mehreren Teilen zusammengesetzt ist.

Besonders vorteilhaft ist es, wenn der Düsenkörper aus zwei Hälften zusammengesetzt ist, die in einer vertikalen Mittelebene des Düsenkörpers aneinander zur Anlage kommen können. Beide Hälften des Düsenkörpers können jeweils besonders einfach und kostengünstig, beispielweise mit Spritzgussverfahren aus Kunststoff, hergestellt werden.

Um eine möglichst bodennahe Ausbringung der Gülle zu ermöglichen, ist es vorteilhaft, wenn an der Auslassöffnung des Düsenkörpers ein Anschlussflansch vorgesehen ist, an dem ein Schlauch befestigbar ist. Im Ergebnis kann dann die Gülle nach Ausströmen durch die Auslassöffnung durch den Schlauch zur Oberfläche des Bodens strömen und dort sehr bodennah ausgebracht werden. Um Beschädigungen des Düsenkörpers durch mechanische Belastungen, wie sie bei der Relativbewegung des Schlauchs auf der Bodenfläche vorkommen können, auszuschließen, ist es besonders vorteilhaft, wenn der Anschlussflansch aus Metall hergestellt ist.

Eine Ausführungsform der Erfindung ist in den Zeichnungen schematisiert dargestellt und wird nachfolgend beispielhaft erläutert.

Es zeigen:
- **Fig. 1**: einen erfindungsgemäßen Düsenkörper bei Anordnung in einer Rohrleitung in perspektivischer Ansicht von vorne;
- **Fig. 2**: den Düsenkörper gemäß Fig. 1 in seitlicher Ansicht.

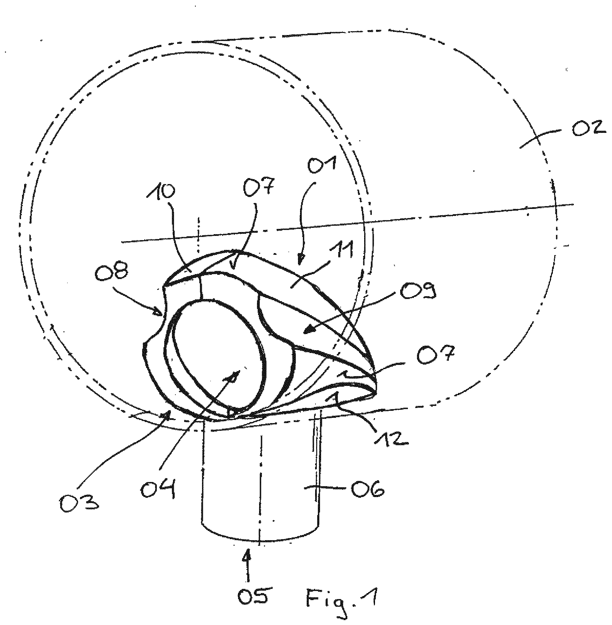

**Fig. 1** zeigt einen Düsenkörper 01 zur Verwendung in einer Vorrichtung zum Verteilen von Gülle. Der Düsenkörper 01 wird dazu in einer Rohröffnung einer Rohrleitung 02 angeordnet. Die Rohrleitung 02 ist in Fig. 1 nur mit einem kleinen Abschnitt dargestellt. Üblicherweise hat die Rohrleitung 02 in der Vorrichtung eine Länge von mehreren Metern und beinhaltet mehrere Rohröffnungen, in denen jeweils ein Düsenkörper 01 angebracht ist. Der Düsenkörper 01 umfasst an seiner zum Ende der Rohrleitung 02 weisenden Vorderseite 03 eine Einlassöffnung 04, die in das Innere der Rohrleitung hineinragt. Sobald Gülle im Inneren der Rohrleitung 02 strömt und am Ende der Rohrleitung 02 zurückgestaut wird, kann die Gülle durch die Einlassöffnung 04 in den Düsenkörper 01 einströmen. Innerhalb des Düsenkörpers 01 strömt die Gülle dann ausgehend von der Einlassöffnung 04 zu einer Auslassöffnung 05, die vom Endquerschnitt eines aus Metall hergestellten Anschlussflansches 06 gebildet wird. Auf den Anschlussflansch 06 kann ein Schlauch aufgeschoben und fixiert werden, so dass die Gülle dann durch den Schlauch fließt und bodennah auf eine Bodenfläche ausgebracht werden kann.

Die Einlassöffnung 04 weist zum hinteren Ende der Rohrleitung 02, so dass das Ausströmen der Gülle durch die Einlassöffnung 04 maßgeblich durch die Rückstauströmung in der Rohrleitung 02 bewirkt wird. Um die Strömungsverhältnisse in der Rückstauströmung zu modifizieren, weist der Düsenkörper 01 eine haubenartig gewölbte, rampenartige Strömungsfläche 07 auf, an der die Gülle entlangströmt. Erst wenn die Rohrleitung 02 vollständig mit Gülle befüllt ist und sich somit ein entsprechender Druck in der Rückstauströmung aufbaut, tritt die Gülle durch die Einlassöffnungen 04 mit maßgeblichen Mengen aus.

Zur Verbesserung der Rückstauströmung weist der Düsenkörper 01 zwei konkav in den Düsenkörper 01 eingeformte Strömungsnuten 08 und 09 auf. Die Strömungsnuten 08 und 09 erstrecken sich vom Querschnitt der Einlassöffnung 04 bis fast zum Ende des Strömungskörpers 01. Die beiden Strömungsnuten 08 und 09 sind spiegelsymmetrisch zur vertikalen Mittelebene des Düsenkörpers 01 angeordnet. Diese Mittelebene bildet zugleich die Teilungsebene, an der der Düsenkörper 01 aus zwei Hälften 10 und 11 zusammengesetzt ist. Die Unterseite 12 des Düsenkörpers 01 ist konvex gewölbt und kann formschlüssig an die Innenseite der Rohrleitung 02 angelegt werden.

Die beiden Hälften 10 und 11 des Düsenkörpers 01 werden aus Kunststoff durch Spritzguss hergestellt. Nachträglich wird dann der aus Metall hergestellte Anschlussflansch 06 befestigt, sobald die beiden Hälften 10 und 11 miteinander verbunden, beispielsweise miteinander verklebt, sind.

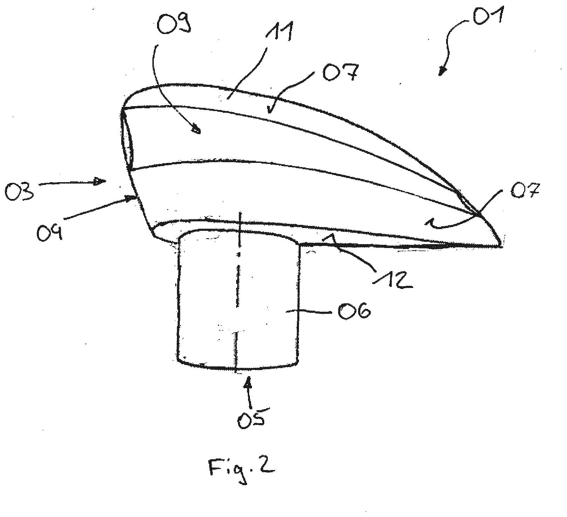

**Fig. 2** zeigt den Düsenkörper 01 mit der sich seitlich über die Strömungsfläche 07 von vorn nach hinten erstreckende Strömungsnut 09 in seitlicher Ansicht. Man erkennt, dass die Strömungsnut 09 sich von vorne nach hinten zunehmend verengt.

## Patentansprüche

1. Düsenkörper (01) zur Verwendung in einer Vorrichtung zum Verteilen von Gülle auf einer Bodenfläche, wobei der Düsenkörper (01) in eine Rohröffnung einer Rohrleitung (02) der Vorrichtung einsetzbar ist, und wobei der Düsenkörper (01) eine Einlassöffnung (04) aufweist, die in das Innere der Rohrleitung hineinragen (02) kann, und wobei der Düsenkörper (01) eine Auslassöffnung (05) aufweist, die aus dem Inneren der Rohrleitung (02) hinausragen kann, und wobei die Einlassöffnung (04) zum hinteren Ende der Rohrleitung (02) ausgerichtet werden kann, und wobei die ins Innere der Rohrleitung (02) weisende Oberseite des Düsenkörpers (01) eine haubenartig gewölbte, rampenartige Strömungsfläche (07) bildet, an der die in der Rohrleitung (02) fließende Flüssigkeit entlang strömen kann,
**dadurch gekennzeichnet,**
**dass** die Strömungsfläche (07) des Düsenkörpers (01) zumindest eine konkav in den Düsenkörper (01) eingeformte Strömungsnut (08, 09) aufweist.

2. Düsenkörper nach Anspruch 1,
**dadurch gekennzeichnet,**
**dass** der Düsenkörper (01) gegenüber einer vertikalen Mittelebene spiegelsymmetrisch ausgebildet ist, wobei der Düsenkörper (01) links und rechts von der Mittelebene jeweils die konkav in den Düsenkörper (01) eingeformte Strömungsnut (08, 09) aufweist.

3. Düsenkörper nach Anspruch 1 oder 2,
**dadurch gekennzeichnet,**
**dass** der Düsenkörper (01) eine konvex gewölbte Unterseite (12) aufweist, die an der Innenseite der Rohrleitung (02) formschlüssig zur Anlage bringbar ist.

4. Düsenkörper nach einem der Ansprüche 1 bis 3,
**dadurch gekennzeichnet,**
**dass** der Düsenkörper (01) aus mehreren Teilen zusammengesetzt ist.

5. Düsenkörper nach Anspruch 4,
**dadurch gekennzeichnet,**
**dass** der Düsenkörper (01) aus zwei Hälften (10, 11) zusammengesetzt ist, die in einer vertikalen Mittelebene des Düsenkörpers (01) aneinander zur Anlage kommen können.

6. Düsenkörper nach einem der Ansprüche 1 bis 5,
**dadurch gekennzeichnet,**
**dass** der Düsenkörper (01) aus Kunststoff hergestellt ist.

7. Düsenkörper nach Anspruch 6,
**dadurch gekennzeichnet,**
**dass** der Düsenkörper (01) aus Kunststoff spritzgegossen ist.

8. Düsenkörper nach einem der Ansprüche 1 bis 7,
**dadurch gekennzeichnet,**
**dass** an der Auslassöffnung (05) des Düsenkörpers (01) ein Anschlussflansch (06) vorgesehen ist, an dem ein Schlauch befestigbar ist.

9. Düsenkörper nach Anspruch 8,
**dadurch gekennzeichnet,**
**dass** der Anschlussflansch (06) aus Metall hergestellt ist.

## Claims

1. A nozzle body (01) for use in a device for distributing liquid manure on a ground surface, the nozzle body (01) being insertable in a tube opening of a tube (02) of the device, and the nozzle body (01) having an inlet opening (04) which can protrude into the interior of the tube (02), and the nozzle body (01) having an outlet opening (05) which can protrude out of the interior of the tube (02), and the inlet opening (04) being able to be directed toward the rear end of the tube (02), and the upper side of the nozzle body (01) directed toward the interior of the tube (02) forming a ramp-like flow surface (07) curved like a cap along which the liquid flowing in the tube (02) can flow, **characterised in that**
the flow surface (07) of the nozzle body (01) has at least one flow groove (08, 09) formed concavely in the nozzle body (01).

2. The nozzle body according to claim 1,
**characterised in that**
the nozzle body (01) is formed mirror-symmetrical relative to a vertical centre plane, the nozzle body (01) having the flow groove (08, 09), which is formed concavely in the nozzle body (01), to the right and left of the centre plane, respectively.

3. The nozzle body according to claim 1 or 2,
**characterised in that**
the nozzle body (01) has a convexly curved underside (12) which can be made to abut on the inner side of the tube (02) in a form-fitting manner.

4. The nozzle body according to any one of the claims 1 to 3, **characterised in that**
the nozzle body (01) is made up of several pieces.

5. The nozzle body according to claim 4,
**characterised in that**
the nozzle body (01) is made up of two halves (10, 11) which can abut against each other in a vertical centre plane of the nozzle body (01).

6. The nozzle body according to any one of the claims 1 to 5, **characterised in that**
the nozzle body (01) is made of plastic.

7. The nozzle body according to claim 6,
**characterised in that**
the nozzle body (01) is injection-moulded from plastic.

8. The nozzle body according to any one of the claims 1 to 7, **characterised in that**
a connecting flange (06), to which a hose can be connected, is provided on the outlet opening (05) of the nozzle body (01).

9. The nozzle body according to claim 8, **characterised in that** the connecting flange (06) is made of metal.

## Revendications

1. Corps de buse (01) pour être utilisé dans un dispositif pour distribuer du lisier sur une superficie de terre, le corps de buse (01) étant insérable dans une ouverture d'un tuyau (02) du dispositif, et le corps de buse (01) ayant une ouverture d'entrée (04) qui peut faire saillie dans l'intérieur du tuyau (02), et le corps de buse (01) ayant une ouverture de sortie (05) qui peut faire saillie hors de l'intérieur du tuyau (02), et l'ouverture d'entrée (04) pouvant être orientée vers l'extrémité arrière du tuyau (02), et le côté supérieur du corps de buse (01) orienté vers l'intérieur du tuyau (02) formant une surface d'écoulement (07) formée comme une rampe et courbée en forme de bonnet, le liquide coulant dans le tuyau (02) pouvant s'écouler le long de ladite surface d'écoulement (07),
**caractérisé en ce que**
la surface d'écoulement (07) du corps de buse (01) comprend au moins une rainure d'écoulement (08, 09) formée de façon concave dans le corps de buse (01).

2. Corps de buse selon la revendication 1,
**caractérisé en ce que**
le corps de buse (01) est formé en symétrie miroir par rapport à un plan central vertical, le corps de buse (01) ayant la rainure d'écoulement (08, 09), qui est formée de façon concave dans le corps de buse (01), à droite et à gauche du plan central, respectivement.

3. Corps de buse selon la revendication 1 ou 2,
**caractérisé en ce que**
le corps de buse (01) a un côté inférieur (12) courbé de façon convexe qui peut être mis en butée contre le côté intérieur du tuyau (02) par un engagement positif.

4. Corps de buse selon l'une quelconque des revendications 1 à 3, **caractérisé en ce que**
le corps de buse (01) est composé de plusieurs parts.

5. Corps de buse selon la revendication 4,
**caractérisé en ce que**
le corps de buse (01) est composé de deux moitiés (10, 11) qui peuvent être mises en butée l'une contre l'autre dans un plan central vertical du corps de buse (01).

6. Corps de buse selon l'une quelconque des revendications 1 à 5, **caractérisé en ce que**
le corps de buse (01) est fabriqué en matière plastique.

7. Corps de buse selon la revendication 6,
**caractérisé en ce que**
le corps de buse (01) est moulé par injection en matière plastique.

8. Corps de buse selon l'une quelconque des revendications 1 à 7, **caractérisé en ce**
**qu'**une bride de raccordement (06), à laquelle un tuyau flexible peut être attaché, est prévue à l'ouverture de sortie (05) du corps de buse (01).

9. Corps de buse selon la revendication 8,
**caractérisé en ce que**
la bride de raccordement (06) est fabriquée en métal.
